# EUROPEAN PATENT APPLICATION

(11) **EP 3 214 743 A1**
(43) Date of publication of application: **06.09.2017**
(21) Application number: 15854480.9
(22) Date of filing: 27.10.2015
(51) Int. Cl.: H02K 41/03, H02K 41/02

(54) **LINEAR ACTUATOR**

(30) Priority: 29.10.2014 JP 2014220267
(71) Applicant: KYB Corporation, Tokyo 105-6111 (JP)
(72) Inventor: SATOU, Kousuke, Tokyo 105-6111 (JP)
(74) Representative: Grünecker Patent- und Rechtsanwälte PartG mbB
(86) International application number: PCT/JP2015/080286
(87) International publication number: WO 2016/068149

(57) **Abstract**

A linear actuator (100) includes: a first tube (10) provided with coils (41) placed there inside, the coils (41) being held by a yoke (40); a rod (30) configured to be movable in the yoke (40) in an axial direction; and permanent magnets (31) that are held by the rod (30) while being lined up in the axial direction so as to oppose the coils (41). The first tube (10) includes an inner tube (12) and a base potion (11). The inner tube (12) has a restriction portion (12C) projecting radially inward at one end thereof. The base portion (11) is coupled to the other end of the inner tube (12). The yoke (40) is inserted into the inner tube (12), and fixedly held between the restriction portion (12C) and the base portion (11).

## Description

### TECHNICAL FIELD

The present invention relates to a linear actuator that is extended and contracted in an axial direction by an electromagnetic force.

### BACKGROUND ART

JP 2014-27740A discloses a linear actuator in which one tube and another tube are relatively displaced, in an axial direction, by an electromagnetic force that is generated between coils provided in one tube and permanent magnets provided in another tube. The coils are fixed inside one tube via a yoke. The yoke includes a small diameter portion that holds the coils, and a large diameter portion that is fit to a base of one tube.

### SUMMARY OF INVENTION

If the large diameter portion is removed to simplify the shape of the yoke, the yoke can no longer be fixed to the base of one tube.

The present invention aims to enable a yoke with a simplified shape to be held inside a linear actuator.

According to one aspect of the present invention, a linear actuator includes: a first tube provided with a plurality of coils placed there inside, the plurality of coils being held by a tubular yoke; a rod configured to be movable in the yoke in an axial direction; and a plurality of permanent magnets held by the rod while being lined up in the axial direction, the plurality of permanent magnets being arranged so as to oppose the plurality of coils. The first tube includes: a tube portion that has a restriction portion projecting radially inward at one end thereof; and a base portion that is coupled to the other end of the tube portion. The yoke is inserted into the tube portion, and fixedly held between the restriction portion and the base portion.

### BRIEF DESCRIPTION OF DRAWINGS

FIG. 1 is a cross-sectional view of a linear actuator in a contracted state according to an embodiment of the present invention, taken along an axial direction.
FIG. 2 is a cross-sectional view of the linear actuator in an extended state according to the embodiment of the present invention, taken along the axial direction.
FIG. 3 is an enlarged view of section III in FIG. 1.
FIG. 4 is a cross-sectional view taken along the line IV-IV in FIG. 3.
FIG. 5 is an enlarged view of section V in FIG. 1.
FIG. 6 is a cross-sectional view taken along the line VI-VI in FIG. 5.

### DESCRIPTION OF EMBODIMENTS

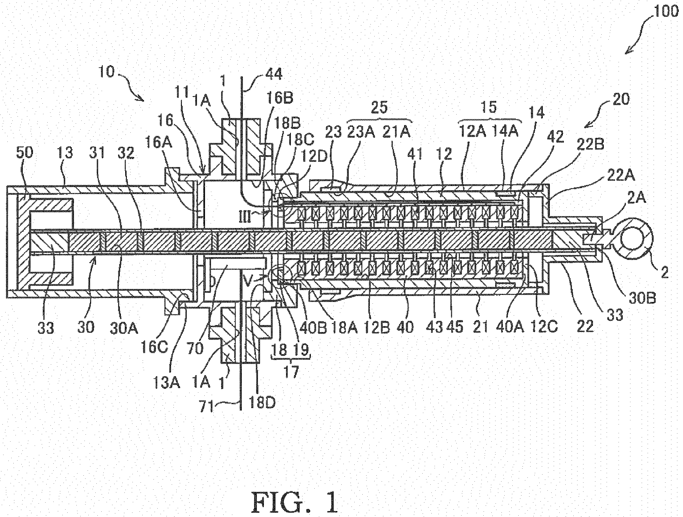

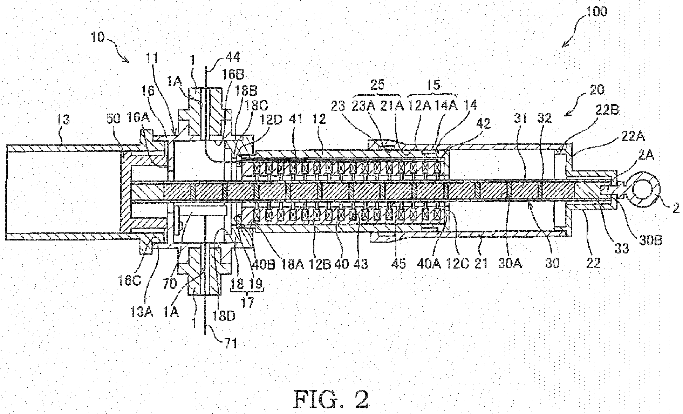

The following describes a linear actuator 100 according to an embodiment of the present invention with reference to FIGs. 1 and 2.

The linear actuator 100 includes a first tube 10, a second tube 20 that is slidably mounted on an outer circumference of the first tube 10, a rod 30 that is fixed to an end of the second tube 20 and holds permanent magnets 31, a yoke 40 that is fit inside the first tube 10 and holds coils 41 opposing the permanent magnets 31, and a stroke sensor 70 serving as a state detection device that is fixed to the inner side of the first tube 10 and detects a state of the linear actuator 100.

In the linear actuator 100, a thrust (an electromagnetic force) that drives the rod 30 in an axial direction is generated in accordance with a current flowing through the coils 41, and the first tube 10 and the second tube 20 are relatively displaced according to the thrust. This causes the linear actuator 100 to extend and contract between a fully contracted position shown in FIG. 1 and a fully extended position shown in FIG. 2.

The first tube 10 includes a base portion 11 having a shape of a hollow cylinder, an inner tube 12 serving as a tube portion that is fixed to one end side of the base portion 11, and a guide tube 13 that is fixed to the other end side of the base portion 11.

The base portion 11 is a tubular member that is open at both ends. The base portion 11 includes a base main body 16 to which the guide tube 13 is coupled, and an adapter portion 17 via which the base main body 16 and the inner tube 12 are connected to each other.

The base main body 16 has a female screw portion (not shown) on its first inner circumferential surface 16B at one end side coupled to the adapter portion 17, and a female screw portion (not shown) on its second inner circumferential surface 16C at the other end side coupled to the guide tube 13. On an inner circumferential surface of the base main body 16, a ring-shaped projected portion 16A that projects radially inward is provided near the second inner circumferential surface 16C. The stroke sensor 70 is attached to the projected portion 16A.

A pair of trunnion shafts 1 projecting in a radial direction is fixed to an outer circumference of the base main body 16. The pair of trunnion shafts 1 is rotatably supported by an external member (not shown). Accordingly, the linear actuator 100 is held in such a manner that it is rotatable with respect to the external member. Each of the pair of trunnion shafts 1 has a through hole 1A. Instead of providing each of the pair of trunnion shafts 1 with the through hole 1A, only one of the pair of trunnion shafts 1 may be provided with the through hole 1A. That is to say, at least one of the pair of trunnion shafts 1 has the through hole 1A.

The inner tube 12 is a tubular member that is open at both ends. The inner tube 12 has a male screw portion (not shown) on its outer circumferential surface 12A at one end side coupled to the adapter portion 17, and a restriction portion 12C at the other end. The restriction portion 12C has a shape of a circular ring, and projects radially inward from an inner circumferential surface 12B of the inner tube 12. The restriction portion 12C defines a position of the yoke 40, which is inserted into the inner circumferential surface 12B of the inner tube 12, in the axial direction.

The adapter portion 17 includes an adapter main body 18 via which the base main body 16 and the inner tube 12 are joined with each other, and a wire leading portion 19 disposed between the adapter main body 18 and the inner tube 12.

The adapter main body 18 is a circular ring member with an inner circumferential surface 18A coupled to one end side of the inner tube 12, and an outer circumferential surface 18B coupled to the first inner circumferential surface 16B of the base main body 16. The inner circumferential surface 18A has a female screw portion (not shown), whereas the outer circumferential surface 18B has a male screw portion (not shown). Furthermore, the inner circumferential surface 18A has a pressing portion 18C that projects radially inward. The pressing portion 18C is positioned so as to oppose a tip face 12D of one end side of the inner tube 12 coupled to the inner circumferential surface 18A.

The adapter main body 18 also has a recess 18D that is positioned so as to oppose the stroke sensor 70, which is disposed inside the base main body 16, in the state where the adapter main body 18 has been coupled to the base main body 16. As the adapter main body 18 has the recess 18D, interference between the sensor and the like disposed inside the base main body 16 and the adapter main body 18 can be avoided. This makes it possible to dispose the adapter main body 18 in the vicinity of the sensor and the like inside the base main body 16. As a result, the total length of the linear actuator 100 can be reduced. The shape of the recess 18D may be changed in accordance with the shape of the sensor and the like disposed in opposition.

The wire leading portion 19 is disposed between the pressing portion 18C of the adapter main body 18 and the tip face 12D of the inner tube 12. The wire leading portion 19 is provided so as to, together with the pressing portion 18C, press and fix the yoke 40 inside the inner tube 12. A specific shape of the wire leading portion 19 will be described later.

The guide tube 13 is a tubular member that is open at both ends. The guide tube 13 has a male screw portion (not shown) on its outer circumferential surface 13A at one end side coupled to the second inner circumferential surface 16C of the base main body 16. Regarding the mechanism of coupling the inner tube 12 and the adapter portion 17 to each other, they are not limited to being screwed to each other; they may be, for example, fit to each other. The same goes for the mechanism of coupling the adapter portion 17 and the base main body 16 to each other, and the mechanism of coupling the adapter portion 17 and the guide tube 13 to each other.

The second tube 20 includes an outer tube 21 having a shape of a hollow cylinder, and a cap 22. The outer tube 21 is open at both ends, and the inner tube 12 of the first tube 10 is slidably inserted into the outer tube 21 from one end side of the outer tube 21. The cap 22 is attached to the other end side of the outer tube 21.

The cap 22 includes a cap main body 22A and a projected portion 22B that has a shape of a hollow cylinder. The projected portion 22B projects from the cap main body 22A along an inner circumference of the outer tube 21. A joint member 2, with which an external device (not shown) is joined, is fixed to an outer side surface of the cap main body 22A. An outer circumference of the projected portion 22B has a male screw portion (not shown). An inner circumference of the other end side of the outer tube 21 has a female screw portion (not shown) that corresponds to the male screw portion. The outer tube 21 and the cap 22 are screwed to each other via these male screw portion and female screw portion. As a result, the other end of the second tube 20 is closed by the cap 22. Regarding the mechanism of coupling the outer tube 21 and the cap 22 to each other, they are not limited to being screwed to each other; they may be, for example, fit to each other.

The linear actuator 100 includes a first linear guide portion 15 and a second linear guide portion 25 for supporting the first tube 10 and the second tube 20 in such a manner that the first tube 10 and the second tube 20 can be relatively displaced in the axial direction.

A ring-shaped first bearing 14 is mounted on an outer circumference of the free end side of the inner tube 12. A bearing surface (an outer circumferential surface) 14A of the first bearing 14 is in sliding contact with an inner circumferential surface 21A of the outer tube 21. The first linear guide portion 15 is composed of the outer circumferential surface 12A of the inner tube 12 and the bearing surface 14A of the first bearing 14.

A ring-shaped second bearing 23 is mounted on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Accordingly, the inner tube 12 and the outer tube 21 smoothly slide on each other. The outer circumferential surface 12A of the inner tube 12 and the inner circumferential surface 21A of the outer tube 21 oppose each other, with no gap therebetween, via the first bearing 14 and the second bearing 23.

The rod 30 is a pole-like member with a hollow portion 30A. One end of the rod 30 is fixed to the inner side of the cap 22 that closes the other end of the second tube 20. Furthermore, the other end of the rod 30 is fixed to a rod guide 50 that is slidably placed inside the guide tube 13. As the rod guide 50 is mounted on the other end of the rod 30, the guide tube 13 and the rod 30 are reliably rendered coaxial. This prevents the end of the rod 30 from swinging in the radial direction during the extension and contraction of the linear actuator 100.

The plurality of permanent magnets 31 are held in the hollow portion 30A of the rod 30 while being lined up in the axial direction. Each permanent magnet 31 has a columnar shape, and is magnetized in such a manner that its N pole and S pole are positioned in the axial direction. Neighboring permanent magnets 31 are placed in such a manner that their ends of the same polarity oppose each other. Furthermore, a yoke 32 is provided between neighboring permanent magnets 31. Note that the yokes 32 need not necessarily be provided, and neighboring permanent magnets 31 may be in contact with each other. Moreover, non-magnetic elements 33 are disposed at both ends inside the hollow portion 30A. That is to say, the hollow portion 30A is fixed to the cap 22 and the rod guide 50 via the non-magnetic elements 33.

The rod 30 is fixed to the cap 22 by a screw portion 2A of the joint member 2 in the state where an end face 30B of the rod 30 is in tight surface contact with an inner side surface of the cap main body 22A. Furthermore, an outer circumferential surface of a part of the rod 30 in which one of the non-magnetic elements 33 is disposed is out of contact with the cap 22, that is to say, distanced from the cap 22 by a predetermined gap. As such, the position of the rod 30 is determined only by the surface contact between the end face 30B of the rod 30 and the cap main body 22A. Therefore, centering of the rod 30 is easily performed. The rod 30 is not limited to being fixed to the cap 22 by the screw portion 2A of the joint member 2; it may be fixed to the cap 22 by a coupling member that is different from the joint member 2. In this case, the joint member 2 and the cap 22 may be formed integrally.

The yoke 40 is a hollow cylindrical member with one end face 40A and the other end face 40B, and has an insertion hole 45 at its center. The rod 30 is inserted through the insertion hole 45 in the axial direction. An inner circumferential surface of the yoke 40 has ring-shaped recesses 43 that are recessed toward an outer circumference of the yoke 40. The plurality of coils 41 are fixed inside the ring-shaped recesses 43, and are lined up in the axial direction so as to oppose the permanent magnets 31. The yoke 40 is inserted into the inner tube 12 to the point where the one end face 40A is in contact with the restriction portion 12C of the inner tube 12.

The outer circumference of the yoke 40, which is in contact with the inner circumferential surface 12B of the inner tube 12, has grooves 42. Each groove 42 runs in a direction of an axis line and has an arc-shaped cross-section. Wires 44 from the plurality of coils 41 are inserted into the grooves 42. Although not illustrated, the grooves 42 are provided at three or more positions with a circumferential interval therebetween. Instead of being provided on an outer circumferential surface of the yoke 40, the grooves 42 may be provided on the inner circumferential surface 12B of the inner tube 12. Furthermore, the grooves 42 may be provided on both of the outer circumferential surface of the yoke 40 and the inner circumferential surface 12B of the inner tube 12. Note that the depth of the grooves 42 from the outer circumferential surface of the yoke 40 may be such that the grooves 42 reach the coils 41. Furthermore, the cross-section of each groove 42 is not limited to the arc-shaped cross-section; it may have any shape as long as the wires 44 can be routed.

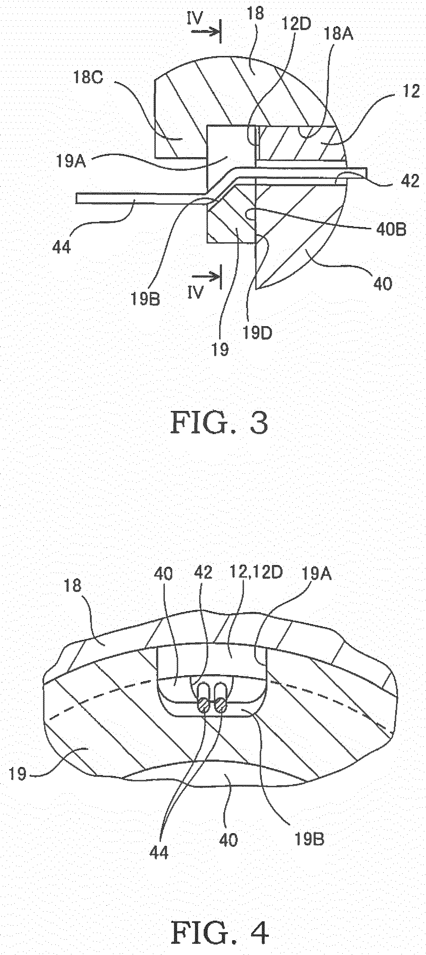

Once the wires 44 have been inserted into the grooves 42, they are directed toward the base main body 16 via the wire leading portion 19, which is disposed between the tip face 12D of the inner tube 12 and the pressing portion 18C of the adapter main body 18. The wire leading portion 19 will now be described with reference to FIGs. 3 to 5.

The wire leading portion 19 is a circular ring member that has leading grooves 19A through which the wires 44 are inserted, engagement portions 19C that engage with the inner tube 12, and a contact face 19D that comes into contact with the yoke 40. As shown in FIGs. 3 and 4, each leading groove 19A is a U-shaped cutout groove that is made by cutting out the wire leading portion 19 from an outer circumferential edge toward the center of the wire leading portion 19. The leading grooves 19A are provided at multiple positions in a circumferential direction in correspondence with the grooves 42 provided on the outer circumference of the yoke 40. Among surfaces that form the leading grooves 19A, surface located near the radially inner side of the wire leading portion 19 serve as wire guiding surfaces 19B. As shown in FIGs. 3 and 4, these wire guiding surfaces 19B are inclined toward a central axis of the rod 30 so as to approach the radially inner side of the wire leading portion 19 with increasing distance from the yoke 40. Note that each leading groove 19A is not limited to the U-shaped cutout groove as long as it has a space through which the wires 44 are inserted. Each leading groove 19A may be a cutout formed along a chord connecting between two points on an outer circumference of the wire leading portion 19, or may be a through hole that penetrates the wire leading portion 19 in the axial direction.

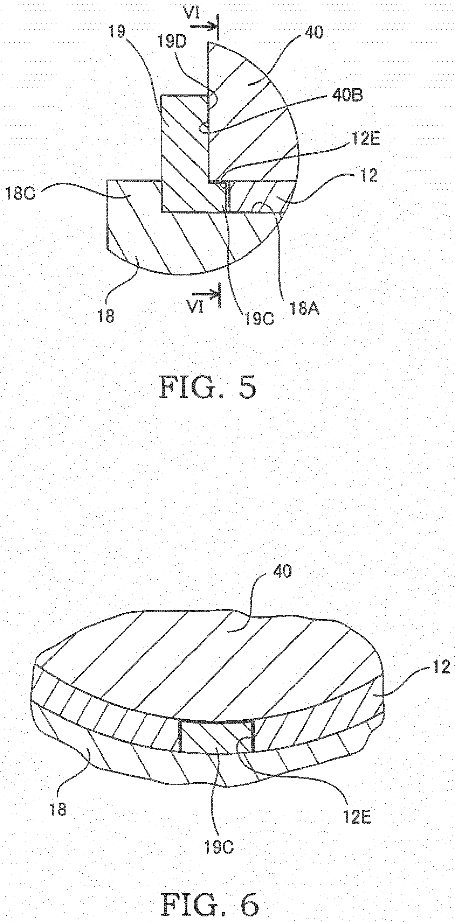

As shown in FIGs. 5 and 6, the engagement portions 19C are protrusions that project from the outer circumferential edge of the wire leading portion 19 toward the inner tube 12. Each engagement portion 19C is disposed between one leading groove 19A and another leading groove 19A that are provided along the circumferential direction. The engagement portions 19C engage with recesses 12E of the inner tube 12 that are provided in correspondence with the engagement portions 19C. This restricts rotation of the wire leading portion 19 around the axis of the rod 30 with respect to the inner tube 12.

As shown in FIGs. 3 and 4, the contact face 19D is one side surface of the wire leading portion 19 on the yoke 40 side. Upon coupling of the inner tube 12 and the adapter main body 18 to each other, the contact face 19D comes into contact with the other end face 40B of the yoke 40 and presses the yoke 40 toward the inside of the inner tube 12. As a result, the yoke 40 is attached to the inside of the inner tube 12. Note that the lengths of the inner tube 12 and the yoke 40 in the axial direction are set in such a manner that, when the inner tube 12 and the adapter main body 18 have been coupled to each other, the contact face 19D and the other end face 40B are in contact with each other but the contact face 19D and the tip face 12D are not in contact with each other.

The wires 44 are inserted through the leading grooves 19A of the wire leading portion 19 configured in the foregoing manner. Consequently, the wires 44 are routed along the wire guiding surfaces 19B toward the rod 30. Therefore, the wires 44 are prevented from coming into contact with the pressing portion 18C of the adapter main body 18 when coupling the inner tube 12 and the adapter main body 18 to each other. Furthermore, as rotation of the wire leading portion 19 relative to the inner tube 12 is restricted, the wires 44 are not cut by the wire leading portion 19 and the inner tube 12. Note that the wire guiding surfaces 19B are not limited to being inclined. It is sufficient for the wire guiding surfaces 19B to enable the wires 44 to be routed radially inward, that is to say, toward the rod 30, around the pressing portion 18C of the adapter main body 18. In addition, it is sufficient for the wire guiding surfaces 19B to ensure spaces that enable the wires 44 to be drawn away from the yoke 40 without interfering with the pressing portion 18C. The wire guiding surfaces 19B may be curved, partially inclined, or stepped.

The wires 44 inserted through the leading grooves 19A are directed to the inside of the base main body 16, and then drawn to the outside via one of the through holes 1A provided in the trunnion shafts 1. Once the wires 44 have been drawn to the outside, they are connected to a controller (not shown). The controller controls the thrust generated by the linear actuator 100 and the directions of the generated thrust (the extension and contraction directions) by controlling the intensity and phase of the current supplied to the coils 41.

The stroke sensor 70, which is attached to the projected portion 16A of the base main body 16, incorporates a Hall sensor that generates a Hall voltage in accordance with the strength of a magnetic field. The stroke sensor 70 detects relative positions of the coils 41 and the permanent magnets 31 on the basis of the Hall voltage generated by the Hall sensor. A wire 71 from the stroke sensor 70 is drawn via the through hole 1A provided in a nearby trunnion shaft 1 among the pair of trunnion shafts 1.

Signals detected by the stroke sensor 70 are input to an external controller via the wire 71. The controller calculates the strokes of the second tube 20 with respect to the first tube 10 on the basis of information detected by the stroke sensor 70, that is to say, the relative positions of the coils 41 and the permanent magnets 31. The controller controls the intensity and phase of the current flowing through the coils 41 while feeding back the strokes of the second tube 20 with respect to the first tube 10. In this way, the linear actuator 100 can be controlled more accurately.

Note that a sensor provided in the linear actuator 100 is not limited to the stroke sensor 70; any sensor may be provided as long as it detects an operational state of the linear actuator. One example is a temperature sensor that detects a temperature state inside the linear actuator 100. Furthermore, the linear actuator 100 may be provided with a plurality of sensors that detect different operational states of the linear actuator 100, e.g., the stroke sensor 70 and the temperature sensor.

A description is now given of a method for assembling the first tube 10 of the linear actuator 100 configured in the foregoing manner.

First, before coupling the adapter portion 17 to the base main body 16, the stroke sensor 70 is attached to the projected portion 16A of the base main body 16. In the state where the adapter portion 17 is not coupled to the base main body 16, the base main body 16 has a large opening, and thus the stroke sensor 70 can easily be attached. The wire 71 from the stroke sensor 70 is drawn to the outside via one of the through holes 1A provided in the trunnion shafts 1 fixed to the base main body 16.

Next, the inner tube 12 and the adapter portion 17 are coupled to each other. In order to couple them to each other, first, the yoke 40 is inserted into the inner tube 12 to the point where the one end face 40A of the yoke 40 is in contact with the restriction portion 12C. At the same time, the wires 44 are drawn via the grooves 42 of the yoke 40. Then, the wire leading portion 19 is brought into engagement with the inner tube 12 in such a manner that the drawn wires 44 are inserted through the leading grooves 19A of the wire leading portion 19.

Next, the wires 44 are routed radially inward along the wire guiding surfaces 19B of the leading grooves 19A. In this state, the inner tube 12 is twisted and thrust into the inner circumferential surface 18A of the adapter main body 18. Once the inner tube 12 has been twisted and thrust to the point where the wire leading portion 19 is in contact with the pressing portion 18C, the contact face 19D of the wire leading portion 19 is in contact with the other end face 40B of the yoke 40. As a result, inside the inner tube 12, the yoke 40 is fixedly held between the restriction portion 12C and the pressing portion 18C.

Furthermore, at this time, as the wires 44 have been routed radially inward along the wire guiding surfaces 19B, the wires 44 are prevented from, for example, getting cut by coming into contact with the pressing portion 18C. Furthermore, as the wire leading portion 19 has been brought into engagement with the inner tube 12, rotation of the wire leading portion 19 relative to the inner tube 12 is restricted. This prevents the wires 44 from getting cut between the inner tube 12 and the wire leading portion 19.

Next, the outer circumferential surface 18B of the adapter main body 18, which has been coupled to the inner tube 12, is twisted and thrust into the first inner circumferential surface 16B of the base main body 16 to which the stroke sensor 70 has been attached. Consequently, the base main body 16 and the adapter main body 18 are coupled to each other. The wires 44 that have been directed to the inside of the base main body 16 are drawn to the outside via one of the through holes 1A provided in the trunnion shafts 1.

Finally, the outer circumferential surface 13A of the guide tube 13 is twisted and thrust into the second inner circumferential surface 16C of the base main body 16. This completes the assembly of the first tube 10. Then, other members, such as the second tube, are arranged in place with respect to the first tube 10 assembled in the foregoing manner. This completes the linear actuator 100.

Note that after the stroke sensor 70 has been attached to the inside of the base main body 16, the adapter main body 18 may be coupled to the base main body 16 before it is coupled to the inner tube 12. In this case, the inner tube 12 is coupled to the adapter main body 18 that has been coupled to the base main body 16. Furthermore, the base main body 16 may be coupled to the guide tube 13 before it is coupled to the adapter main body 18.

Furthermore, the guide tube 13 may include the projected portion 16A to which the stroke sensor 70 is attached. In this case, the base main body 16 and the guide tube 13 may be coupled to each other before attaching the stroke sensor 70.

A description is now given of the operation of the linear actuator 100.

In the linear actuator 100, when the coils 41 are supplied with a current of a predetermined direction, a thrust that drives the rod 30 in one direction (a rightward direction in FIG. 1) is generated. Along with the driving of the rod 30 in one direction, the linear actuator 100 extends as the outer tube 21 of the second tube 20 moves while sliding with respect to the inner tube 12 of the first tube 10.

As shown in FIG. 2, when the linear actuator 100 has extended to the fully extended position, the rod guide 50 is in contact with a side surface of the projected portion 16A of the base main body 16, thereby restricting a further movement of the rod 30. As such, the rod guide 50 functions as a stopper.

On the other hand, when the coils 41 are supplied with a current with a phase opposite to a phase of the current supplied during the extension, a thrust that drives the rod 30 in the other direction (a leftward direction in FIG. 2) is generated. Along with the driving of the rod 30 in the other direction, the linear actuator 100 contracts as the outer tube 21 of the second tube 20 moves while sliding with respect to the inner tube 12 of the first tube 10.

As shown in FIG. 1, when the linear actuator 100 has contracted to the fully contracted position, a tip of the projected portion 22B that projects from the cap main body 22A is in contact with the restriction portion 12C of the inner tube 12, thereby restricting a further movement of the rod 30. As such, the cap main body 22A and the restriction portion 12C function as stoppers. Regarding the specific configurations of the stoppers, the projected portion 22B that projects from the cap main body 22A may be replaced with a projected portion that projects from the restriction portion 12C toward the cap main body 22A, or both of the cap main body 22A and the restriction portion 12C may have a projected portion. The stoppers may be configured in any manner as long as the movement of the rod 30 is restricted by the cap main body 22A and the restriction portion 12C.

Furthermore, the projected portion may be provided on an outer circumferential edge of the cap main body 22A or the restriction portion 12C, or may be provided near the rod 30. In order for the projected portion to ensure a contact area, it is preferable to provide the projected portion on the outer circumferential edge. For example, a buffer member may be provided on a surface of the cap main body 22A or the restriction portion 12C to lessen contact-induced shock.

Furthermore, as shown in FIG. 1, when the linear actuator 100 is at the fully contracted position, a part of the permanent magnets 31 extends out from the coils 41 fixed to the yoke 40 toward the cap 22. With the part of the permanent magnets 31 thus positioned beyond the coils 41 in the extension direction of the linear actuator 100 at the fully contracted position, the thrust (the electromagnetic force) for driving the rod 30 is easily generated in causing the linear actuator 100 to extend from the fully contracted position.

The foregoing embodiment achieves the following effects.

In the present embodiment, the yoke 40 is inserted into the inner tube 12, which composes the first tube 10, and is fixedly held between the restriction portion 12C of the inner tube 12 and the pressing portion 18C of the base portion 11. Therefore, even if the yoke 40 has a simplified shape, it can be held inside the linear actuator 100.

Furthermore, the stroke sensor 70 can be attached to the inside of the base main body 16 via an open end of the base main body 16 in the state where the adapter portion 17 has not been arranged in place yet. As a result, the assembly of the stroke sensor 70 for detecting the state of the linear actuator 100 can be improved.

Furthermore, the first tube 10 includes the wire leading portion 19 that is disposed between the inner tube 12 and the adapter main body 18. The wire leading portion 19 has the leading grooves 19A through which the wires 44 from the plurality of coils 41 are inserted. With this configuration, when coupling the inner tube 12 and the adapter portion 17 to each other, the wire leading portion 19 directs the wires 44 toward the base main body 16. This can prevent the wires 44 from, for example, getting cut by getting caught between the inner tube 12 and the adapter main body 18, or by coming into contact with the adapter main body 18.

Furthermore, the leading grooves 19A have the wire guiding surfaces 19B that are located near the radially inner side of the wire leading portion 19. The wire guiding surfaces 19B approach the radially inner side of the wire leading portion 19 with increasing distance from the yoke 40. With this configuration, the wires 44 are routed toward the radially inner side of the wire leading portion 19 along the wire guiding surfaces 19B. As a result, the wires 44 are distanced from the adapter main body 18. This can prevent the wires 44 from, for example, getting cut by getting caught between the inner tube 12 and the adapter main body 18, or by coming into contact with the adapter main body 18.

Furthermore, the wire leading portion 19 also has the engagement portions 19C that engage with the inner tube 12 to restrict relative rotation. With this configuration, when coupling the inner tube 12 and the adapter main body 18 to each other, the wire leading portion 19 does not rotate relative to the inner tube 12. This can prevent the wires 44 from getting cut between the inner tube 12 and the wire leading portion 19.

Furthermore, the adapter main body 18 has the recess 18D that is positioned so as to oppose the stroke sensor 70 attached to the base main body 16. As the adapter main body 18 has the recess 18D, interference between the sensor and the like disposed inside the base main body 16 and the adapter main body 18 can be avoided. This makes it possible to dispose the adapter main body 18 in the vicinity of the sensor and the like inside the base main body 16. As a result, the total length of the linear actuator 100 can be reduced.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2014-220267 filed with the Japan Patent Office on October 29, 2014, the entire contents of which are incorporated into this specification.

## Claims

1. A linear actuator, comprising:
a first tube provided with a plurality of coils placed there inside, the plurality of coils being held by a tubular yoke;
a rod configured to be movable in the yoke in an axial direction; and
a plurality of permanent magnets held by the rod while being lined up in the axial direction, the plurality of permanent magnets being arranged so as to oppose the plurality of coils,
wherein
the first tube includes: a tube portion that has a restriction portion projecting radially inward at one end thereof; and a base portion that is coupled to the other end of the tube portion, and
the yoke is inserted into the tube portion, and fixedly held between the restriction portion and the base portion.

2. The linear actuator according to claim 1,
wherein
the base portion includes a base main body and an adapter portion, the adapter portion being configured to join the base main body and the tube portion, and
the yoke is fixedly held between the restriction portion and the adapter portion.

3. The linear actuator according to claim 2,
wherein
the adapter portion includes a wire leading portion provided so as to be in contact with the yoke,
the wire leading portion has a leading groove, and
a wire from the plurality of coils is inserted into the leading groove.

4. The linear actuator according to claim 3,
wherein
the leading groove has a wire guiding surface near a radially inner side of the wire leading portion, and
the wire guiding surface approaches the radially inner side of the wire leading portion with increasing distance from the yoke.

5. The linear actuator according to claim 3,
wherein
the wire leading portion has an engagement portion that engages with the tube portion such that relative rotation is restricted.

6. The linear actuator according to claim 2, further comprising
a state detection device attached to an inner side of the first tube, the state detection device detecting a state of the linear actuator,
wherein
the adapter portion has a recess positioned so as to oppose the state detection device.
